# EUROPEAN PATENT APPLICATION

(11) **EP 4 468 539 A1**
(43) Date of publication of application: **27.11.2024**
(21) Application number: 24176442.2
(22) Date of filing: 16.05.2024
(51) Int. Cl.: H02G 3/00, F16L 3/04, F16L 3/233, H02G 3/32

(54) **CHANNEL MOUNT FIXINGS FOR THE STACKED MOUNTING OF ELONGATED ARTICLES**

(30) Priority: 18.05.2023 US 202363502964 P; 22.09.2023 US 202363584775 P
(71) Applicant: HellermannTyton Corporation, Milwaukee, WI 53224 (US)
(72) Inventor: Klos, Scott G., Grafton, Wisconsin (US); Cors, Mark W., St. Francis, Wisconsin (US); Uhler, Daniel S., Milwaukee, Wisconsin (US)
(74) Representative: Hernandez, Yorck

(57) **Abstract**

Disclosed in this publication are channel mount fixings for the stacked mounting of elongated articles. In one implementation, a channel mount fixing includes a body section, a mount, and an object support. The body section is configured to position an elongated article adjacent to a workpiece. The mount is configured to attach to the workpiece. The object support is configured to support the article. The object support and body section define a channel therebetween that is configured to receive the article. The object support includes a block, a stand-off member, and a retainer arm. The block is configured to attach to the article via a cable tie and defines a cable tie pass-thru therethrough that is configured to receive the cable tie. The stand-off member is configured to space the block apart from the body section. The retainer arm is configured to retain the article in the channel.

## Description

### INCORPORATION BY REFERENCE

This application claims the benefit of U.S. Provisional Application Nos. 63/584,775, filed September 22, 2023, and 63/502,964, filed May 18, 2023, the disclosures of which are incorporated by reference.

### BACKGROUND

The disclosure generally relates to the fields of electrical installations (e.g., electrical conduits). More specifically, in aspects, the disclosure relates to cable management systems and devices (e.g., cable routing channels, cable management systems, wire trays, cable duct assemblies, cable ducts, modular cable duct assemblies, conveyor channel assemblies, and the like) that are used to conceal, protect, route, secure, and/or organize cables and other elongated articles inside open environments, electrical panels, electrical cabinets, or conveyors, in hard-to-reach spaces, confined spaces, passageways, and other applications. Examples of conventional cable management systems and devices include adhesive mounting bases, screw mounting bases, mounting plates, push mounts, saddle mounts, and the like. While conventional systems and devices are readily available, familiar to technicians, and inexpensive and come in a variety of sizes, such systems and devices typically require wire-on-wire bundling (e.g., using cable ties) for multiple routes.

In some applications, the cable pathways can be highly congested, including multiple wires attached to each other, which can result in large, interwoven bundles of wiring that may be secured by multiple layers of cable ties. It can be a time- and labor-intensive process to rework or update such interwoven bundles of wiring. For example, to rework and/or update a bundle or wiring path that was created through use of cable ties, new cables may be placed in the passageway, the existing cable ties cut off the bundle, and a new bundle (that includes the new cables) is formed around the cables using a new cable tie(s). In such a rework/update, the cutting process can result in inadvertent damage to the cables.

### SUMMARY

This document describes channel mount fixings for the stacked mounting of elongated articles. In implementations, the channel mount fixings for elongated article stacking are utilized for channel route organization.

In some aspects, the techniques described herein relate to a channel mount fixing including: a body section, the body section configured to position an elongated article adjacent to a workpiece; a mount, the mount configured to attach to the workpiece, the mount connected to the body section; and an object support, the object support configured to support the elongated article, the object support extending from the body section, the object support and the body section defining a cradle therebetween, the cradle configured to receive the elongated article, the object support including: a block, the block configured to attach to the elongated article via a cable tie, the block defining a cable tie pass-thru therethrough that is configured to receive the cable tie therein; a stand-off member, the stand-off member configured to space the block apart from the body section, the block extending from the stand-off member; and a retainer arm, the retainer arm configured to retain the elongated article in the cradle, the retainer arm extending from the block.

This Summary is provided to introduce simplified concepts of channel mount fixings for the stacked mounting of elongated articles, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of channel mount fixings for the stacked mounting of elongated articles are described with reference to the following Drawings.
FIG. 1 is a schematic illustration of a system including a channel mount fixing.
FIG. 2A is a left, front perspective view of an implementation of a channel mount fixing.
FIG. 2B is a right, front perspective view of the fixing of FIG. 2A.
FIG. 2C is a left, rear perspective view of the fixing of FIG. 2A.
FIG. 2D is a right, front perspective view of the fixing of FIG. 2A, illustrating an environment.
FIG. 2E is a cross-section view along lines 2E-2E in FIG. 2D.

### DETAILED DESCRIPTION

The following detailed description of example implementations of channel mount fixings for the stacked mounting of elongated articles refers to the accompanying Drawings. The same reference numbers in different Drawings may identify the same or similar features, elements, and/or components.

### Overview

Described herein are implementations of improved channel mount fixings for the stacked mounting of elongated articles. The disclosed channel mount fixings may be configured as cable stacker mounts, channel routing organizers, and the like. A channel mount fixing (referred to herein as a "fixing") is configured to receive, secure, and/or support one or more elongated articles on, within, or to a workpiece. Examples of workpieces include cable routing channels, conveyor channel assemblies, frame rails, support beams, housings, frames, and the like. A fixing may be utilized in a system that also includes elongated articles, the workpiece, and cable tie(s).

The described fixings simplify component installation and rework. An improved fixing may be configured to align and hold elongated articles (e.g., wires, cables) in parallel paths without the use of cable ties. When elongated articles are routed through use of a described fixing, the elongated articles stay in place. This allows for installation verification before the need to fasten the elongated articles into a bundle to the fixing, which reduces installation time, simplifies installation and rework, and facilitates installation verification (e.g., by a supervisor) before the final bundle is formed and attached to the fixing.

The described fixings may be configured to hold elongated articles in place without the use of cable ties during installation and allow the technician (e.g., user, technician user, installer) to add and/or remove elongated articles during rework without the potential of causing to damage the elongated articles. A fixing may temporarily hold one or more elongated articles along a route path until a technician is ready to fix the routed elongated articles in place along the route path. The described fixings further enable a technician to move and/or reposition a fixing while elongated article(s) held in a cradle(s) are retained therein, which may include before a cable tie is utilized to fasten the elongated article(s) together or to the fixing. Further, through use of the fixings, a technician does not need to use temporary strap material to create temporary bundles. Instead, the technician can route all of the elongated article(s) and then apply the cable tie(s) to fasten the elongated article(s) together (e.g., into bundles) or to the fixing. Doing so avoids the need for the technician to, for every new elongated article that is added to a "string" of elongated articles, remove temporary strap material (e.g., by cutting a cable tie) and add new strap material (e.g., add a new cable tie). In this way, the time and labor involved in routing elongated articles along a route path during an installation process is decreased. Further, the utilization of multiple cradles may enable faster elongated article installation (e.g., routing) and may reduce the time needed to rework routed elongated article(s).

The fixings may be utilized for elongated article route organization (e.g., to organize elongated articles, mount cables, relieve congestion along cable pathways). The fixings may also improve the appearance and aesthetics of channel-routed elongated articles. The fixings may be configured to hold elongated articles in place without cable ties during routing.

### Channel Mount Fixings

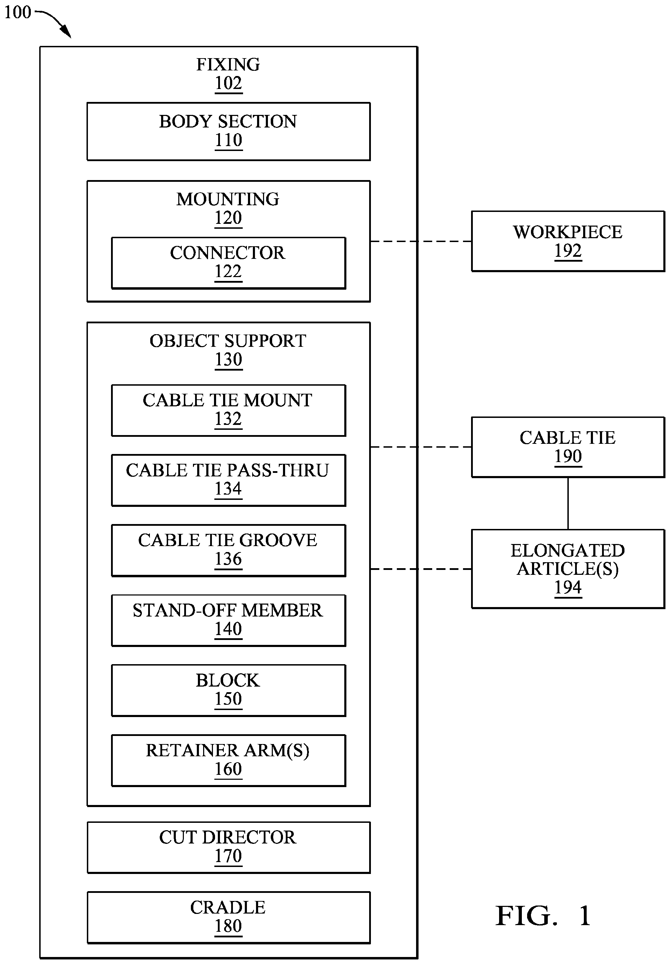

Referring initially to FIG. 1, provided is a schematic illustration of a system 100 that includes a channel mount fixing for the stacked mounting of elongated articles (e.g., fixing 102). The fixing 102 is utilized to support one or more elongated article(s) 194 on, within, or to a workpiece 192. The workpiece 192 may include a cable routing channel, a conveyor channel assembly, and the like. The elongated article(s) 194 may include one or more objects (e.g., wires, hoses, tubes, cables, fiber optic cables, electrical cables, power cables, communication cables, cable harnesses, conductors, conduits, pipes, hoses, and the like) and/or bundles thereof.

The fixing 102 includes a body (e.g., body section 110) that is configured to position the elongated article(s) 194 adjacent to the workpiece 192. The body section 110 may include a top end that extends to a bottom end, which define a longitudinal axis. The fixing 102 includes a mount 120 that is configured to mount the fixing 102 on the workpiece 192. In implementations, the mount 120 may connect to the body section 110 at a first side of the body section 110, an object support 130 extends from the body section 110 at a second side of the body section 110, and the first side is opposite the second side. The workpiece 192 may include a mount surface, which may include a mount aperture (e.g., a slot, a bore, a threaded hole, and the like) that is defined therein. The workpiece 192 may be a cable routing channel, and the mount surface and/or the mount aperture may be located within the channel of the cable routing channel. The mount aperture of the workpiece 192 may be configured to engagingly receive a fastener (e.g., a threaded bolt, a screw, a rivet, an M5 stud mount, an M6 stud mount).

The mount 120 may include a connector 122, which is configured to connect the mount 120 to the workpiece 192. The mount aperture and/or the mount surface of the workpiece 192 may be configured to engage the connector 122 of the mount 120. In implementations, the connector 122 is a fastener aperture (e.g., a recessed fastener aperture, a circular hole, an elongated slot) that is defined through the mount 120 (e.g., through the wing). The connector 122 may be configured to receive the fastener therethrough. In another example, the connector 122 may be a screw attachment that fastens with a screw and T-nut (e.g., Tee nut) to the workpiece 192 (e.g., a #10 (M6) screw that is configured to attach into a panel surface or with a T-nut in frame). In another example, the mount 120 may utilize an adhesive fastener to mount to the mount surface of the workpiece 192 and the connector 122 may be a surface of the mount 120 to which the adhesive fastener is applied. The adhesive fastener may be a double-sided adhesive tape, a double-stick adhesive foam, a pressure-sensitive adhesive tape, and the like. In other implementations, the workpiece 192 may attach to the fixing 102 via an elongated fastener (e.g., a stud, a threaded bolt) that extends from the workpiece 192, by the mount 120 clamping onto an edge of the workpiece 192, and the like. The fastener and/or the connector 122 may be accessible to a technician when the elongated article(s) 194 are attached to the fixing 102. In this way, the fastener can be accessed by the technician without first removing the attached elongated article(s) 194 from the object support 130. For example, the fastener may be accessible around a bundle formed of the elongated article(s) 194 by a cable tie 190, which enables the technician to manipulate the fastener to attach or detach the fixing 102 from the workpiece 192. This decreases the time and labor involved in running cables during an installation process.

The fixing 102 includes at least one object support 130 that is configured to support the elongated article(s) 194. The object support 130 extends from the body section 110 and is configured to receive, mount, support, and/or attach one or more elongated article(s) 194 to the workpiece 192. Multiple object supports may be spaced apart and extend from the body section 110 oriented along the longitudinal axis. The object supports may be parallel to one another and spaced apart along the longitudinal axis in a stacked configuration.

The object support 130 and the body section 110 define a cradle 180 (e.g., cradle partitions, channel pockets) therebetween, which is configured to receive the elongated article(s) 194. A fixing 102 may include multiple cradles that are configured to receive elongated article(s) 194. The multiple cradles may provide for separation of different types of elongated article(s) 194. For example, the multiple cradles may provide for separation of wire types for easy identification, separation of types of elongated article(s) 194 to minimize crosstalk of signal and power (e.g., by isolation of one or more of power-carrying components, data-carrying components, and/or fluid-carrying components from one another), and the like. The cradles may be oriented in a stacked configuration, which enables groups of the elongated article(s) 194 to be stacked relative to one another. A cradle 180 may be arcuately shaped, U-shaped, C-shaped, and the like.

The cradle 180 is configured to temporarily hold (e.g., by cradling) one or more elongated article(s) 194 (collectively a "string" of elongated articles) close to a desired mount location (e.g., on a workpiece 192) while the technician routes the elongated article(s) 194 along a route path. The cradle 180 may be configured to loosely (e.g., without the utilization of a cable tie 190 to attach the elongated article(s) 194 to the fixing 102) hold the elongated article(s) 194 in place while they are routed along the string. Once the elongated article(s) 194 are routed, the technician may then bundle the elongated article(s) 194 together into one or more bundles through the use of a cable tie 190. In this way, the technician does not need to use temporary strap material to create temporary bundles. Instead, the technician can route all of the elongated article(s) 194 and then apply the cable tie 190 to create the bundle(s). This avoids the need for the technician to, for every new elongated article 194 that is added to a string of elongated articles, remove temporary strap material (e.g., by cutting a cable tie) and add new strap material (e.g., add a new cable tie). This is in contrast to some prior systems where, for every new elongated article 194 that is added to the string, the existing bundle needs to be held in place while the existing cable ties are cut and new cable ties are re-added. Loosely holding the elongated article(s) 194 in place while they are routed along the string may decrease the time and labor involved in running the elongated article(s) 194 during an installation process. The elongated article(s) 194 may also be attached to the object support 130 via a cable tie 190.

The object support 130 may include at least one block 150. The block 150 is configured to attach to the elongated article(s) 194 via the cable tie 190. The block 150 may extend in an upward direction from a stand-off member 140. The block 150 may be spaced apart from the body section 110.

The block 150 includes a top portion that has a mounting surface that forms a saddle that is configured to support elongated article(s) 194. The block 150 may define a cable tie pass-thru 134 therethrough. The cable tie pass-thru 134 may be defined relative to the top portion. The cable tie pass-thru 134 is configured to receive a cable tie 190 therein. The cable tie 190 may be extended through the cable tie pass-thru 134 and around the top portion to cinch an elongated article(s) 194 to the block 150 at the top portion.

The object support 130 may include at least one stand-off member 140 that is configured to space the block 150 (and any retainer arms 160) apart from the body section 110. In this way, the block 150 extends from the stand-off member 140; for example, the stand-off member 140 may extend from the body section 110 orthogonally. The object support 130 may include at least one retainer arm 160. The retainer arm 160 (e.g., a retention pin) is configured to retain the elongated article(s) 194 in the cradle 180 (e.g., during build out). The retainer arm 160 may be configured to allow a technician to access the cradle 180 to add elongated article(s) 194 to or remove elongated article(s) 194 from the cradle 180. The retainer arm 160 may extend from at least one of the block 150 or the stand-off member 140, the retainer arm 160 spaced apart from the block 150. In implementations, the retainer arm 160 extends orthogonally from at least one of the block 150 or the stand-off member 140. The retainer arm 160 may include cradle identification indicia that are configured to indicate to a technician an identity of a cradle 180.

The fixing 102 may include a cable tie mount 132 that includes at least one aperture (e.g., slot) that is configured to receive the cable tie 190 that is utilized to connect the elongated article(s) 194 to the fixing 102. In implementations, the cable tie mount 132 includes a cable tie pass-thru 134 that is configured to receive an end of the cable tie 190 (e.g., a tail of the cable tie 190) and guide it through the fixing 102 to orient the cable tie 190 in a position where the technician can create a bundle from elongated article(s) 194 held in the cradle 180 and/or attach the elongated article(s) 194 to the fixing 102.

The cable tie mount 132 may include a cable tie groove 136 that is configured to guide a cable tie 190 around an elongated article(s) 194. The cable tie groove 136 may be defined in at least one of an upper surface of the stand-off member 140 or the body section 110. The cable tie groove 136 may provide for obstruction-free insertion of a cable tie 190 into the fixing 102 to cinch down a bundle of elongated article(s) 194. The cable tie groove 136 is configured to receive and guide a cable tie (e.g., cable tie 190) inserted through the cable tie pass-thru 134 to position the cable tie 190 in a fastening position around the elongated article(s) 194. The cable tie groove 136 may extend from the stand-off member 140 to the body section 110. The cable tie groove 136 may connect with the cable tie pass-thru 134 to enable a cable tie 190 inserted into the cable tie pass-thru 134 to transition into the cable tie groove 136. The cable tie groove 136 may be oriented orthogonally to a width of the cable tie pass-thru 134 and may be oriented orthogonally to a length of one or more elongated article(s) 194 held in the cradle 180. The cable tie groove 136 may include, or be defined adjacent to, at least one guide flange that is configured to limit lateral movement of the cable tie (e.g., out of the cable tie groove 136). In implementations, the cable tie groove 136 may define a recessed, open-ended trough. The cable tie groove 136 may extend around a portion of a periphery of the cradle 180, so as to provide adjustable attachment to elongated article(s) 194 (and/or bundles thereof) of varying sizes.

In such a configuration, the technician can insert an end of a cable tie 190 (e.g., a tail end) into the cable tie pass-thru 134, which will route the cable tie 190 into the cable tie groove 136. The technician can then further insert the cable tie 190 to pass the cable tie 190 to a position where the technician can then grasp the end of the cable tie 190, loop the cable tie 190 over and/or around the elongated article(s) 194, and connect the ends of the cable tie 190 together to bundle the elongated article(s) 194 in the cradle 180 and to the block 150 of the object support 130. The cable tie mount 132 eliminates common obstructions for faster installation by the technician and/or maintains clear space to insert cable ties. In this way, the time and labor involved in the routing of elongated article(s) 194 along a route path during an installation process is decreased. The cable tie mount 132 may guide (e.g., lead in) an end (e.g., tail end) of the cable tie 190 under and around the elongated article(s) 194 to avoid the end of the cable tie 190 snagging on the elongated article(s) 194. In this way, the fixing 102 decreases the time and labor involved in the routing of elongated article(s) 194 along a route path during an installation process is decreased.

At least one cable tie 190 (e.g., strap material, a hook-and-loop fastener strap, a plastic band, a metal band, twine, a wire, and the like) may be utilized to attach one or more of the elongated article(s) 194, or bundles thereof, to the fixing 102. In implementations, a cable tie 190 includes a head end and a tail end. The head end includes a locking head, and the tail end includes an elongated strap that extends from the locking head. The elongated strap may be configured for insertion through the locking head to form a loop (e.g., a loop around an elongated article). The locking head may include a pawl mechanism configured to engage strap serrations defined on the elongated strap and thereby retain the elongated strap relative to the locking head. The locking head may include a release feature (e.g., unlocking tab, unlocking lever) configured to permit the pawl mechanism to be released from engagement with the strap serrations of the strap and thereby enable the cable tie to be removed from the securement of the elongated article(s) 194. The release feature may be configured to enable an operator to digitally manipulate (e.g., utilizing a finger of the operator, utilizing a tool) the release feature to disengage pawl teeth on the pawl from engagement with the strap serrations. Disengagement of the pawl teeth from the strap serrations permits the elongated strap to be withdrawn from the locking head and the cable tie 190 to be removed from the securement of the elongated article(s) 194.

Because the elongated article(s) 194 may be tightly bound (e.g., compressively) with a cable tie 190, if a bundle of elongated article(s) 194 needs to be reworked (e.g., to add one or more elongated article(s) 194 to and/or remove or more elongated article(s) 194 from the bundle), it can be difficult for a technician to cut off an installed cable tie 190 without causing damage (e.g., nicking) to the elongated article(s) 194. The fixing 102 may define at least one cut director 170 that includes features and/or geometry that are configured to protect the elongated article(s) 194 from damage when a technician cuts the installed cable tie 190 off the fixing 102. In this way, the cut director 170 is configured to protect the respective elongated article(s) 194 from damage when the respective cable tie 190 is cut off the fixing 102.

The cut director 170 supports the cable tie 190 spaced apart from a surface (e.g., face) of the fixing 102. For example, the cut director 170 may define a groove that is configured to receive a cutter tool while a technician applies a cutting force (e.g., while a technician applies a cutting force to a handle of diagonal pliers). For example, the cut director 170 may include a first ridge and a second ridge, which define the groove therebetween. The first and second ridges may extend from a surface of the block 150 (e.g., a block surface). The first ridge and the second ridge may define a groove therebetween. The groove may be configured for spanning support of a cable tie 190 and configured to receive a cutter tool for the cutting of the cable tie 190. In this way, the cut director 170 is configured to receive a cable tie 190 that spans the groove. The groove serves as a guide for a technician to aim for when the technician removes a cable tie 190 from a bundle of elongated article(s) 194 through use of the cutter device (e.g., a diagonal plier tool (e.g., wire cutters, side cutters), a bladed cutter (e.g., a knife), and the like). In this way, damage to the elongated article(s) 194 caused when the cable tie 190 is removed (e.g., by cutting during a rework process) is prevented. Further, through such protection of the elongated article(s) 194 from damage when a cable tie 190 is cut off, rework is avoided, which decreases the time and labor involved in running cables during an installation process.

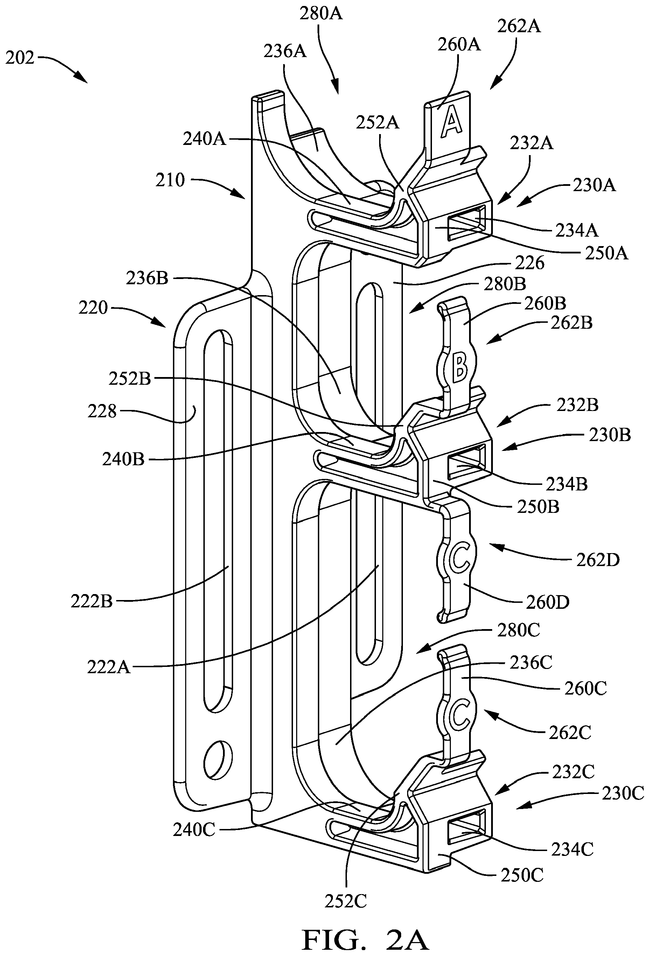

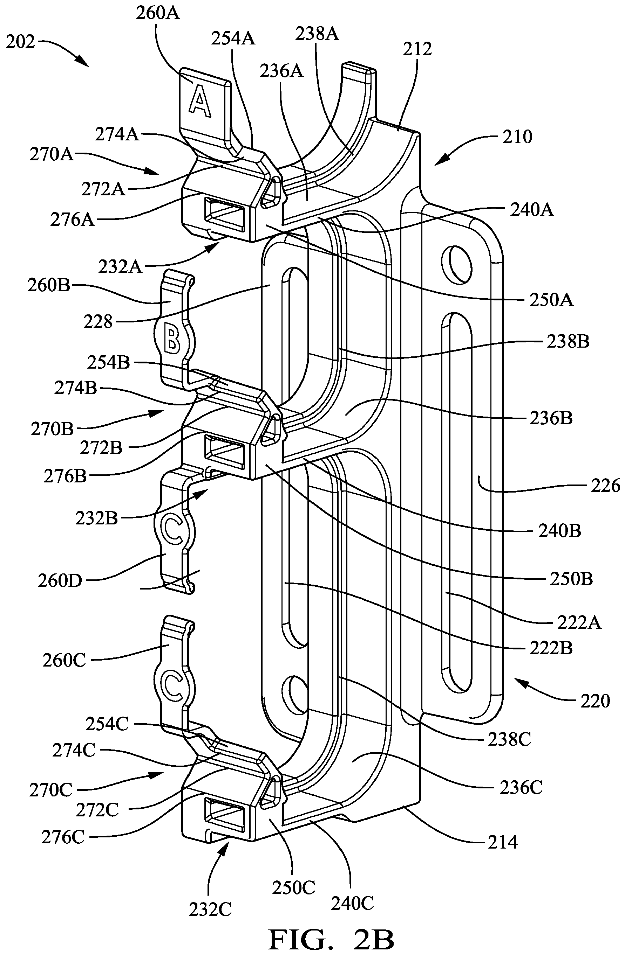

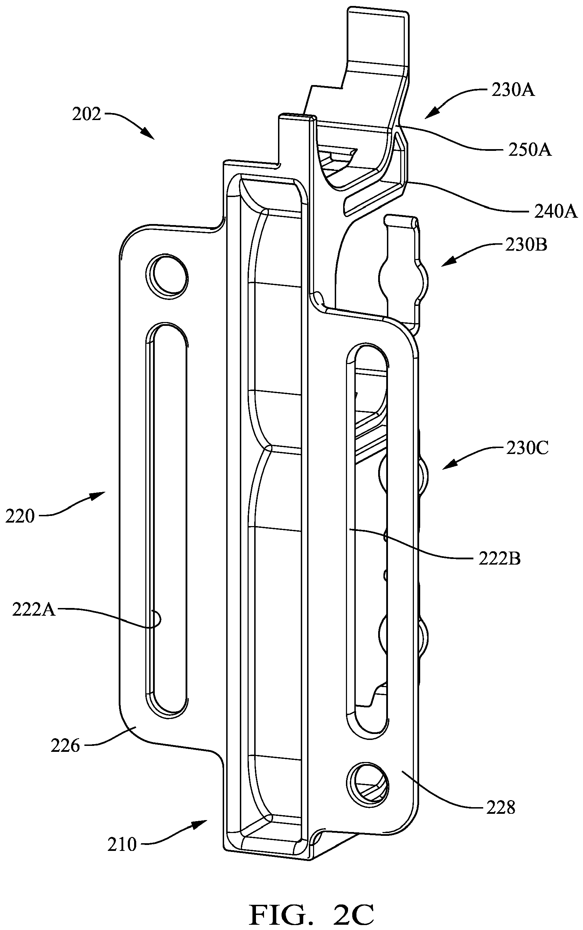

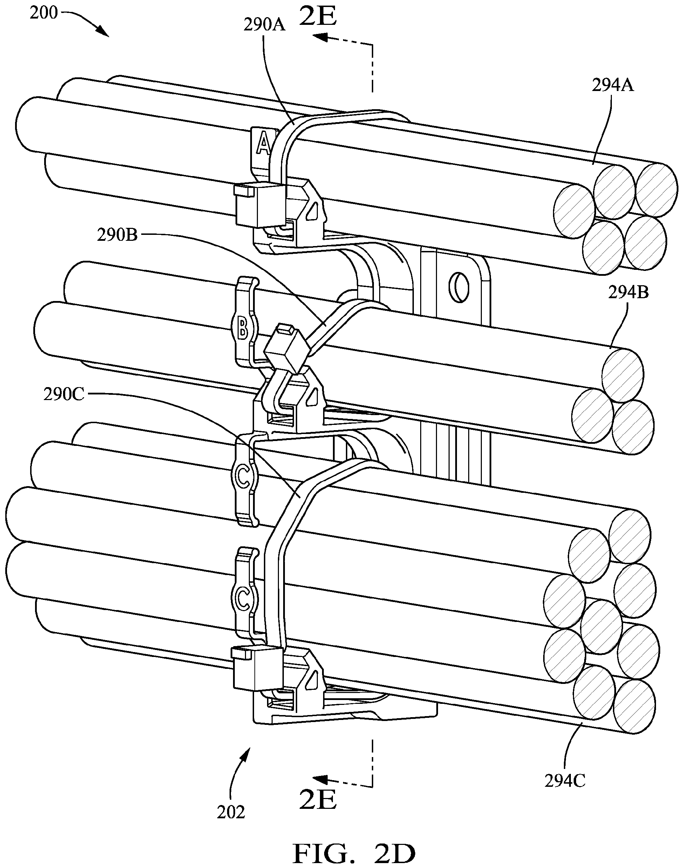

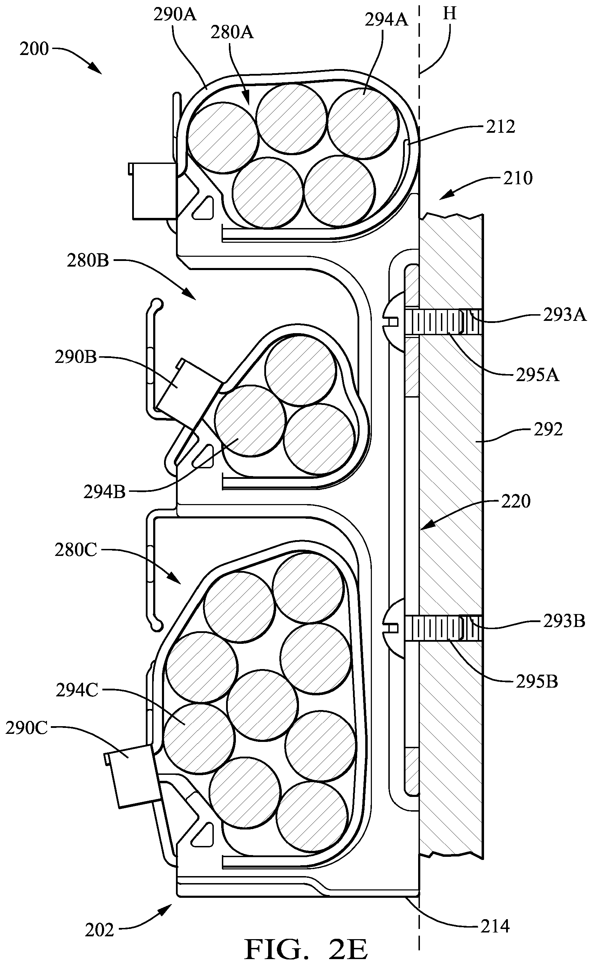

Referring now to FIGs. 2A-2E, illustrated is an implementation of a channel mount fixing (fixing 202) for the stacked mounting of elongated articles. FIG. 2A is a left, front perspective view of the fixing 202, FIG. 2B is a right, front perspective view of the fixing 202, and FIG. 2C is a left, rear perspective view of the fixing 202. The fixing 202 may be used in a system 200 (e.g., system 100) that includes at least one cable tie 290 (first cable tie 290A, second cable tie 290B, third cable tie 290C), a workpiece 292, and one or more elongated article(s) 294 (first elongated article(s) 294A, second elongated article(s) 294B, third elongated article(s) 294C), as illustrated in FIGs. 2D and 2E, where FIG. 2D is a right, front perspective view of the fixing 202 and FIG. 2E is a cross-section view along lines 2E-2E in FIG. 2D of the fixing 202. The fixing 202 is utilized to support the elongated article(s) 294 on, within, or to the workpiece 292. The fixing 202 is similar to the fixing 102 illustrated in FIG. 1 and described above, except as detailed below. Thus, the fixing 202 may include a body section 210, a mount 220, at least one connector 222, at least one object support 230, at least one cable tie mount 232, at least one cable tie pass-thru 234, at least one cable tie groove 236, at least one stand-off member 240, at least one block 250, at least one retainer arm 260, at least one cut director 270, and at least one cradle 280.

The body section 210 is configured to position the elongated article(s) 294 adjacent to the workpiece 292. In FIG. 2E, the workpiece 292 is a support structure (e.g., a panel) that includes a least one mount aperture (mount aperture 293A, mount aperture 293B) defined therein. The mount aperture may be configured to receive a fastener (fastener 295A, fastener 295B). In implementations, the workpiece 292 may be a cable routing channel. As illustrated in FIG. 2E, the body section 210 includes a top end 212 that extends to a bottom end 214, which define a longitudinal axis (H).

In some implementations, not illustrated, the workpiece 292 is a conveyor channel that includes a baseplate configured to mount to a surface and a pair of spaced apart and opposing sidewalls that extend from the baseplate and define a passageway therein. In such a configuration, the conveyor channel may have a "U-shaped" cross-section, a "C-shaped" cross-section, or another-shaped cross-section. The sidewalls terminate at a protrusion or other flange. In such an implementation, at least one of the top end 212 or the bottom end 214 may define a raceway configured to engage the protrusion (e.g., by snapping onto the sidewalls at the protrusions, with the cradle 280 facing into or out of the passageway of the workpiece 292). In other implementations, not illustrated, at least one of the top end 212 or the bottom end 214 may define a flange configured for receipt into the passageway of the workpiece 292 between the baseplate and the opposing sidewalls. In such a configuration, the fixing 202 is configured for twist-in connection with the conveyor passageway.

Returning to the implementation illustrated in FIGs. 2A-2E, the mount 220 connects to the body section 210 and is configured to mount the fixing 202 on the workpiece 292. In the implementation illustrated in FIGs. 2A-2E, the mount 220 includes a first wing 226 that extends from a right side of the body section 210 and a second wing 228 that extends from a left side of the body section 210. The first wing 226 and the second wing 228 may extend perpendicular to the longitudinal axis (H) of the body section 210. In implementations, the fixing 202 has the mount 220. In implementations, a mount may be omitted.

The mount 220 may include at least one connector 222 (connector 222A, connector 222B) that is configured for connection with the workpiece 292. In the implementation illustrated in FIGs. 2A-2E, the first wing 226 defines a connector 222A and the second wing 228 defines a second connector 222B. The connector 222A and the connector 222B are fastener apertures that are defined through the mount 220, which are configured to receive a fastener 295 (fastener 295A, fastener 295B) therethrough. In FIG. 2E, the fasteners 295 are illustrated as threaded screws. The workpiece 292 may be a cable routing channel where the mount apertures (mount aperture 293A, mount aperture 293B) are located within the cable routing channel. The workpiece 292 defines at least one mount aperture 293 (mount aperture 293A, mount aperture 293B) that is configured to engagingly receive a fastener (fastener 295A, fastener 295B). An end of the fastener 295 (fastener 295A, fastener 295B) may be passed through the fastener aperture of the connector 222 (connector 222A, connector 222B) and into a mount aperture 293 (mount aperture 293A, mount aperture 293B) defined in the workpiece 292 to attach the fixing 202 to the workpiece 292, as illustrated in FIG. 2E.

The fixing 202 includes at least one object support 230 that is configured to support the elongated article(s) 294. The object support 230 extends from the body section 210 (e.g., from a front side of the body section 210) and is configured to receive, mount, support, and/or attach the elongated article(s) 294 to the workpiece 292. The fixing 202 that is illustrated in FIGs. 2A-2E includes a first object support 230A, a second object support 230B, and a third object support 230C. The object supports 230 may be parallel to one another and spaced apart along the longitudinal axis (H) of the body section 210 in a stacked configuration. In the implementation illustrated, the second object support 230B is located between the first object support 230A and the third object support 230C. In implementations, the fixing 202 has an object support 230. In implementations, an object support 230 may be omitted.

The object support 230 and the body section 210 define at least one cradle 280 (cradle 280A, cradle 280B, cradle 280C) therebetween that is configured to receive elongated article(s) 294. A fixing 202 may include at least one cradle 280 that is configured to provide for separation of different types of elongated articles 294. For example, the cradle(s) 280 may provide for separation of wire types for easy identification, separation of types of elongated articles 194 to minimize crosstalk of signal and power (e.g., by isolation of one or more of power-carrying components, data-carrying components, and/or fluid-carrying components from one another), and the like. The cradle(s) 280 may be oriented in a stacked configuration, which may enable groups of elongated articles 294 to be stacked relative to one another.

The first object support 230A and the body section 210 define a first cradle 280A, for example, defined between the body section 210 and a stand-off member 240A of the first object support 230A. The second object support 230B and the body section 210 define a second cradle 280B, for example, defined between the stand-off member 240A of the object support 230A, the body section 210, and a stand-off member 240B of the second object support 230B. The third object support 230C and the body section 210 define a third cradle 280C, for example, defined between the stand-off member 240B of the second object support 230B, the body section 210, and a stand-off member 240C of the third object support 230C.

The cradle 280 is configured to temporarily hold (e.g., by cradling) one or more elongated article(s) 294 close to a desired mount location (e.g., on the workpiece 292) while a technician routes a string of the elongated article(s) 294 along a route path. The cradle 280 may be configured to loosely (e.g., without the utilization of a cable tie 290 to attach the elongated article(s) 294 to the fixing 202) hold the elongated article(s) 294 in place while they are routed along the string. Once the elongated article(s) 294 are routed, the technician may then bundle the elongated article(s) 294 together into one or more bundles through the use of a cable tie(s) 290. The elongated article(s) 294 may also be attached to the object support 230 via a cable tie(s) 290. In implementations, the fixing 202 has a cradle 280. In implementations, a cradle 280 may be omitted.

The object support 230 may include at least one block 250. The block 250 is configured to attach to the elongated article(s) 294 via a cable tie 290. The block 250 may extend in an upward direction from a stand-off member 240 and may be spaced apart from the body section 210. In the implementation illustrated in FIGs. 2A-2E, the object support 230A includes a first block 250A, the object support 230B includes a second block 250B, and the object support 230C includes a third block 250C. The block 250 (block 250A, block 250B, block 250C) includes a top portion 252 (first top portion 252A, second top portion 252B, third top portion 252C) that has a mount surface that forms a saddle that is configured to support elongated article(s) 294. In implementations, the fixing 202 has a block 250. In implementations, a block 250 may be omitted.

The fixing 202 may include a cable tie mount 232 (first cable tie mount 232A, second cable tie mount 232B, third cable tie mount 232C) that includes at least one aperture (e.g., slot) that is configured to receive the cable tie 290 that is utilized to connect the elongated article(s) 294 to the fixing 202. In implementations, the fixing 202 has a cable tie mount 232. In implementations, a cable tie mount 232 may be omitted.

In implementations, the cable tie mount 232 includes a cable tie pass-thru 234 (first cable tie pass-thru 234A, second cable tie pass-thru 234B, third cable tie pass-thru 234C) that is configured to receive an end of the cable tie 290 (e.g., a tail of the cable tie 290) and guide it through the fixing 202 to orient the cable tie 290 in a position where the technician can create a bundle from elongated article(s) 294 held in the cradle 280 and/or attach the elongated article(s) 294 to the fixing 202. The block 250 may define the cable tie pass-thru 234 therethrough. The cable tie pass-thru 234 may be defined relative to the top portion 252. The cable tie pass-thru 234 is configured to receive the cable tie 290 therein. The cable tie 290 may be extended through the cable tie pass-thru 234 and around the top portion 252 to cinch an elongated article(s) 294 to the block 250 at the top portion 252. The block 250 may define a notch 254 (first notch 254A, second notch 254B, third notch 254C) configured to orient the cable tie 290. The notch 254 may be located in the top portion 252 of the block 250. In the implementation illustrated in FIGs. 2A-2E, the block 250A defines a first cable tie pass-thru 234A, the block 250B defines a second cable tie pass-thru 234B, and the block 250C defines a third cable tie pass-thru 234C. In implementations, the fixing 202 has a cable tie pass-thru 234. In implementations, a cable tie pass-thru 234 may be omitted.

The object support 230 may include at least one stand-off member 240 (first stand-off member 240A, second stand-off member 240B, third stand-off member 240C) that is configured to space the block 250 (and any retainer arms 260) apart from the body section 210. In this way, the block 250 extends from the stand-off member 240. For example, the stand-off member 240 may extend from the body section 210 orthogonally. The stand-off member 240 may have a first end opposite a second end. The stand-off member 240 may extend from the body section 210 at the first end and may attach to the block 250 at the second end. In implementations, the fixing 202 has a stand-off member 240. In implementations, a stand-off member 240 may be omitted.

The object support 230 may include at least one retainer arm(s) 260 (first retainer arm 260A, second retainer arm 260B, third retainer arm 260C, fourth retainer arm 260D) that is configured to retain the elongated article(s) 294 in the cradle 280 (e.g., during build out). The retainer arm 260 may be configured to allow a technician to access the cradle 280 to add elongated article(s) 294 to and/or remove elongated article(s) 294 from the cradle 280. The retainer arm(s) 260 extend from at least one of a block 250 or a stand-off member 240. In the implementation illustrated in FIGs. 2A-2E, the first object support 230A includes a first retainer arm 260A that extends upwards from the block 250A, which is configured to retain first elongated article(s) 294A, illustrated in FIGs. 2D and 2E, in the first cradle 280A. The second object support 230B includes a second retainer arm 260B that extends upwards from the block 250B, which is configured to retain second elongated article(s) 294B in the second cradle 280B. The second retainer arm 260B is spaced apart from the block 250A to define an entrance to the cradle 280B. The third object support 230C includes a third retainer arm 260C that extends upwards from the block 250C and a fourth retainer arm 260D that extends downwards from the block 250B and/or from the stand-off member 240B. The third retainer arm 260C and the fourth retainer arm 260D are configured to retain third elongated article(s) 294C in the third cradle 280C. The third retainer arm 260C is spaced apart from the fourth retainer arm 260D to define an entrance to the cradle 280C. In implementations, the retainer arm(s) 260 may extend orthogonally from at least one of the block 250 or the stand-off member 240. In implementations, the fixing 202 has a retainer arm(s) 260. In implementations, a retainer arm(s) 260 may be omitted.

The retainer arm(s) 260 may include cradle identification indicia 262 that are configured to indicate to a technician an identity of a cradle 280. For example, FIG. 2A illustrates cradle identification indicia 262A that identify the first cradle 280A, cradle identification indicia 262B that identify the second cradle 280B, and cradle identification indicia 262C and cradle identification indicia 262D that identify the cradle 280C. In implementations, the fixing 202 has cradle identification indicia 262. In implementations, cradle identification indicia 262 may be omitted.

The cable tie mount 232 may include a cable tie groove 236 (first cable tie groove 236A, second cable tie groove 236B, third cable tie groove 236C) that is configured to guide a cable tie 290 around an elongated article(s) 294. The cable tie groove 236 may be defined in at least one of an upper surface of the stand-off member 240 or the body section 210. The cable tie groove 236 may provide for obstruction-free insertion of a cable tie 290 into the fixing 202 to cinch down a bundle of elongated article(s) 294. The cable tie groove 236 is configured to receive and guide a cable tie (e.g., cable tie 290) inserted through the cable tie pass-thru 234 to position the cable tie 290 in a fastening position around the elongated article(s) 294. The cable tie groove 236 may extend from the stand-off member 240 to the body section 210. The cable tie groove 236 may connect with the cable tie pass-thru 234 to enable a cable tie 290 inserted into the cable tie pass-thru 234 to transition into the cable tie groove 236. The cable tie groove 236 may be oriented orthogonally to a width of the cable tie pass-thru 234 and may be oriented orthogonally to a length of one or more elongated article(s) 294 held in the cradle 280. In implementations, the fixing 202 has a cable tie groove 236. In implementations, a cable tie groove 236 may be omitted.

The cable tie groove 236 may include, or be defined adjacent to, at least one guide flange 238 (first guide flange 238A, second guide flange 238B, third guide flange 238C) that is configured to limit lateral movement of the cable tie 290 (e.g., out of the cable tie groove 236). In implementations, the cable tie groove 236 may define a recessed, open-ended trough. The cable tie groove 236 may extend around a portion of a periphery of the cradle 280, so as to provide adjustable attachment to elongated article(s) 294 (and/or bundles thereof) of varying sizes. In implementations, the fixing 202 has a guide flange 238. In implementations, a guide flange 238 may be omitted.

In such a configuration, the technician can insert an end (e.g., a tail end) of a cable tie 290 into the cable tie pass-thru 234, which will route the cable tie 290 into the cable tie groove 236. The technician can then further insert the cable tie 290 to pass the cable tie 290 to a position where the technician can then grasp the end of the cable tie 290, loop the cable tie 290 over and/or around the elongated article(s) 294, and connect the ends of the cable tie 290 together to bundle the elongated article(s) 294 in the cradle 280 and to the block 250 of the object support 230. The cable tie mount 232 eliminates common obstructions for faster installation by the technician and/or maintains clear space to insert cable ties. In this way, the time and labor involved in the routing of elongated article(s) 294 along a route path during an installation process is decreased. The cable tie mount 232 may guide (e.g., lead in) an end (e.g., tail end) of the cable tie 290 under and around the elongated article(s) 294 to avoid the end of the cable tie 290 snagging on the elongated article(s) 294. In this way, the time and labor involved in the routing of elongated article(s) 294 along a route path during an installation process is decreased.

One or more cable tie(s) 290 may be utilized to attach one or more of the elongated article(s) 294, or bundles thereof, to the fixing 202. FIGs. 2D and 2E illustrate cable ties (first cable tie 290A, second cable tie 290B, third cable tie 290C) utilized to attach respective elongated articles 294 (elongated article(s) 294A, elongated article(s) 294B, elongated article(s) 294C), which are received in respective cradle(s) 280 (first cradle 280A, second cradle 280B, third cradle 280C) together into bundles that are respectively attached to the fixing 202 (e.g., attached to the fixing 202 at respective blocks 250 (first block 250A, second block 250B, third block 250C)).

The fixing 202 may define at least one cut director 270 (first cut director 270A, second cut director 270B, third cut director 270C) that includes features and/or geometry that are configured to protect the elongated article(s) 294 from damage when a technician cuts an installed cable tie 290 off the fixing 202. The cut director 270 supports the cable tie 290 spaced apart from a surface (e.g., face) of the fixing 202. The cut director 270 may define a groove 272 (first groove 272A, second groove 272B, third groove 272C) that is configured to receive a cutter tool while the technician applies a cutting force. The cut director 270 may include a first ridge 274 and a second ridge 276, which respectively define the groove 272 therebetween. The first ridge 274 and the second ridge 276 may extend from a surface of the block 250 (e.g., a block surface) and define the groove 272 therebetween. The groove 272 may be configured for spanning support of a cable tie 290 and configured to receive a cutter tool for the cutting of the cable tie 290. FIG. 2B illustrates the cut director 270 (cut director 270A, cut director 270B, cut director 270C), the first ridge 274 (first ridge 274A, first ridge 274B, first ridge 274C), the second ridge 276 (second ridge 276A, second ridge 276B, second ridge 276C), and the groove 272 (first groove 272A, second groove 272B, third groove 272C). In implementations, the fixing 202 has at least one cut director 270. In implementations, a cut director 270 may be omitted.

### Additional Examples

Some additional examples of channel mount fixings for the stacked mounting of elongated articles are as follows:
Example 1. A channel mount fixing comprising: a body section, the body section configured to position an elongated article adjacent to a workpiece; a mount, the mount configured to attach to the workpiece, the mount connected to the body section; and an object support, the object support configured to support the elongated article, the object support extending from the body section, the object support and the body section defining a cradle therebetween, the cradle configured to receive the elongated article, the object support comprising: a block, the block configured to attach to the elongated article via a cable tie, the block defining a cable tie pass-thru therethrough that is configured to receive the cable tie therein; a stand-off member, the stand-off member configured to space the block apart from the body section, the block extending from the stand-off member; and a retainer arm, the retainer arm configured to retain the elongated article in the cradle, the retainer arm extending from the block.
Example 2. The channel mount fixing of Example 1, wherein the mount connects to the body section at a first side of the body section, wherein the object support extends from the body section at a second side of the body section, and wherein the first side is opposite the second side.
Example 3. The channel mount fixing of Example 1, wherein the body section further comprises: a cable tie groove defined in at least one of an upper surface of the stand-off member or the body section, the cable tie groove configured to receive and guide a cable tie inserted through the cable tie pass-thru to position the cable tie in a fastening position around the elongated article.
Example 4. The channel mount fixing of Example 3, wherein the cable tie groove further comprises: at least one guide flange, the guide flange configured to limit lateral movement of the cable tie.
Example 5. The channel mount fixing of Example 4, wherein the cable tie groove is defined adjacent to the guide flange.
Example 6. The channel mount fixing of Example 1, wherein the mount further comprises: a wing that extends orthogonally from a first side of the body section, the wing including a connector configured to connect the mount to the workpiece.
Example 7. The channel mount fixing of Example 6, wherein the connector is a fastener aperture defined through the wing, the fastener aperture configured to receive a fastener that is configured to engage the workpiece.
Example 8. The channel mount fixing of Example 6, wherein the mount further comprises: a second wing that extends orthogonally from a second side of the body section, the second side opposite the first side, the second wing including a second connector configured to connect the mount to the workpiece, the second connector is a second fastener aperture defined through the second wing, the second fastener aperture configured to receive a second fastener that is configured to engage the workpiece.
Example 9. The channel mount fixing of Example 1, further comprising: a second object support, the second object support configured to support a second elongated article, the second object support extending from the body section, the second object support and the body section defining a second cradle therebetween, the second cradle configured to receive the elongated article, the second object support comprising: a second block, the second block configured to attach to the second elongated article via a second cable tie, the second block defining a second cable tie pass-thru therethrough that is configured to receive the second cable tie therein; a second stand-off member, the second stand-off member configured to space the second block apart from the body section, the second block extending from the second stand-off member; and a second retainer arm, the second retainer arm configured to retain the second elongated article in the second cradle, the second retainer arm extending from the second block, the second retainer arm spaced apart from the second block to define the second cradle therebetween.
Example 10. The channel mount fixing of Example 9, wherein the body section has a top end and a bottom end, the top end and bottom end defining a longitudinal axis therebetween, and wherein the object support and the second object support are spaced apart along the longitudinal axis in a stacked configuration.
Example 11. The channel mount fixing of Example 9, further comprising: a third object support, the third object support configured to support a third elongated article, the third object support extending from the body section, the third object support and the body section defining a third cradle therebetween, the third cradle configured to receive the third elongated article, the third object support further comprising: a third block, the third block configured to attach to the third elongated article via a third cable tie, the third block defining a third cable tie pass-thru therethrough that is configured to receive the third cable tie therein; a third stand-off member, the third stand-off member configured to space the third block apart from the body section, the third block extending from the third stand-off member; and a third retainer arm, the third retainer arm configured to retain the third elongated article in the third cradle, the third retainer arm extending from the third block.
Example 12. The channel mount fixing of Example 11, wherein the body section has a top end and a bottom end, the top end and bottom end defining a longitudinal axis therebetween, and wherein the object support, the second object support, and the third object support are spaced apart along the longitudinal axis.
Example 13. The channel mount fixing of Example 11, wherein at least one of the retainer arm, second retainer arm, or third retainer arm further comprises: cradle identification indicia, the cradle indicia configured to indicate to a user an identity of a cradle.
Example 14. The channel mount fixing of Example 11, wherein the second object support further comprises: a fourth retainer arm, the fourth retainer arm configured to retain the third elongated article in the third cradle, the fourth retainer arm extending from the second block, the fourth retainer arm extending in a direction towards the third block, the fourth retainer arm spaced apart from the third retainer arm to define the third cradle therebetween.
Example 15. The channel mount fixing of Example 1, wherein the block further comprises: a cut director configured to protect the respective elongated article from damage when the respective cable tie is cut off the channel mount fixing, the cut director further comprising: a first ridge extending from a block surface of the block; and a second ridge extending from the block surface, the first ridge and the second ridge defining the cradle therebetween, the cradle configured for spanning support of the respective cable tie, the cradle configured to receive a cutting tool for cutting the respective cable tie.
Example 16. A channel mount fixing comprising: a body section, the body section configured to position an elongated article adjacent to a workpiece, the body section further comprising a cable tie groove; a mount, the mount configured to attach to the workpiece, the mount connected to the body section; and an object support, the object support configured to support the elongated article, the object support extending from the body section, the object support and the body section defining a cradle therebetween, the cradle configured to receive the elongated article, the object support comprising: a block, the block configured to attach to the elongated article via a cable tie, the block defining a cable tie pass-thru therethrough that is configured to receive the cable tie therein; a stand-off member, the stand-off member configured to space the block apart from the body section, the block extending from the stand-off member; and a retainer arm, the retainer arm configured to retain the elongated article in the cradle, the retainer arm extending from the block, wherein the cable tie groove is defined in at least one of an upper surface of the stand-off member or the body section, the cable tie groove configured to receive and guide a cable tie inserted through the cable tie pass-thru to position the cable tie in a fastening position around the elongated article, wherein the mount connects to the body section at a first side of the body section, wherein the object support extends from the body section at a second side of the body section, and wherein the first side is opposite the second side.
Example 17. The channel mount fixing of Example 16, wherein the cable tie groove further comprises: at least one guide flange, the guide flange configured to limit lateral movement of the cable tie.
Example 18. The channel mount fixing of Example 17, wherein the cable tie groove is defined adjacent to the guide flange.
Example 19. The channel mount fixing of Example 16, further comprising: a second object support, the second object support configured to support a second elongated article, the second object support extending from the body section, the second object support and the body section defining a second cradle therebetween, the second cradle configured to receive the elongated article, the second object support comprising: a second block, the second block configured to attach to the second elongated article via a second cable tie, the second block defining a second cable tie pass-thru therethrough that is configured to receive the second cable tie therein; a second stand-off member, the second stand-off member configured to space the second block apart from the body section, the second block extending from the second stand-off member; and a second retainer arm, the second retainer arm configured to retain the second elongated article in the second cradle, the second retainer arm extending from the second block, the second retainer arm spaced apart from the second block to define the second cradle therebetween.
Example 20. The channel mount fixing of Example 19, further comprising: a third object support, the third object support configured to support a third elongated article, the third object support extending from the body section, the third object support and the body section defining a third cradle therebetween, the third cradle configured to receive the third elongated article, the third object support further comprising: a third block, the third block configured to attach to the third elongated article via a third cable tie, the third block defining a third cable tie pass-thru therethrough that is configured to receive the third cable tie therein; a third stand-off member, the third stand-off member configured to space the third block apart from the body section, the third block extending from the third stand-off member; and a third retainer arm, the third retainer arm configured to retain the third elongated article in the third cradle, the third retainer arm extending from the third block.

### Manufacture

One or more of the components of the disclosed channel mount fixings for the stacked mounting of elongated articles may be integrally formed of a suitable material(s) through one or more of an injection-molding process, an additive manufacturing process (e.g., a fused deposition modeling (FDM) process, a three-dimensional (3D) printing process), or another suitable process.

### Materials

One or more of the components of the disclosed channel mount fixings for the stacked mounting of elongated articles may be fabricated of any suitable material, including, but not limited to, a metal, a ceramic, a polymer (e.g., a polymeric material), and/or a composite. Suitable polymeric materials may include one or more of polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof, as well as fiber reinforced materials. A suitable polymeric material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like). One or more of the components of the disclosed channel mount fixings may be formed of the same material as the other components, or of a different material than the other components.

### Construction

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of' a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Conclusion

In implementations, a channel mount fixing may include one or more of the features of the channel mount fixings illustrated in the drawings and described above. Although implementations of channel mount fixings for the stacked mounting of elongated articles have been described in language specific to certain features and/or methods, the subject of the appended claims is not necessarily limited to the specific features or methods described. Rather, the specific features and methods are disclosed as example implementations of channel mount fixings for the stacked mounting of elongated articles.

## Claims

1. A channel mount fixing comprising:
a body section, the body section configured to position an elongated article adjacent to a workpiece;
a mount, the mount configured to attach to the workpiece, the mount connected to the body section; and
an object support, the object support configured to support the elongated article, the object support extending from the body section, the object support and the body section defining a cradle therebetween, the cradle configured to receive the elongated article, the object support comprising:
a block, the block configured to attach to the elongated article via a cable tie, the block defining a cable tie pass-thru therethrough that is configured to receive the cable tie therein;
a stand-off member, the stand-off member configured to space the block apart from the body section, the block extending from the stand-off member; and
a retainer arm, the retainer arm configured to retain the elongated article in the cradle, the retainer arm extending from the block.

2. The channel mount fixing of claim 1, wherein the mount connects to the body section at a first side of the body section, wherein the object support extends from the body section at a second side of the body section, and wherein the first side is opposite the second side.

3. The channel mount fixing of any one of the preceding claims, wherein the body section further comprises:
a cable tie groove defined in at least one of an upper surface of the stand-off member or the body section, the cable tie groove configured to receive and guide a cable tie inserted through the cable tie pass-thru to position the cable tie in a fastening position around the elongated article.

4. The channel mount fixing of claim 3, wherein the cable tie groove further comprises:
at least one guide flange, the guide flange configured to limit lateral movement of the cable tie.

5. The channel mount fixing of claim 4, wherein the cable tie groove is defined adjacent to the guide flange.

6. The channel mount fixing of any one of the preceding claims, wherein the mount further comprises:
a wing that extends orthogonally from a first side of the body section, the wing including a connector configured to connect the mount to the workpiece.

7. The channel mount fixing of claim 6, wherein the connector is a fastener aperture defined through the wing, the fastener aperture configured to receive a fastener that is configured to engage the workpiece.

8. The channel mount fixing of claim 6 or 7, wherein the mount further comprises:
a second wing that extends orthogonally from a second side of the body section, the second side opposite the first side, the second wing including a second connector configured to connect the mount to the workpiece, the second connector is a second fastener aperture defined through the second wing, the second fastener aperture configured to receive a second fastener that is configured to engage the workpiece.

9. The channel mount fixing of any one of the preceding claims, further comprising:
a second object support, the second object support configured to support a second elongated article, the second object support extending from the body section, the second object support and the body section defining a second cradle therebetween, the second cradle configured to receive the elongated article, the second object support comprising:
a second block, the second block configured to attach to the second elongated article via a second cable tie, the second block defining a second cable tie pass-thru therethrough that is configured to receive the second cable tie therein;
a second stand-off member, the second stand-off member configured to space the second block apart from the body section, the second block extending from the second stand-off member; and
a second retainer arm, the second retainer arm configured to retain the second elongated article in the second cradle, the second retainer arm extending from the second block, the second retainer arm spaced apart from the second block to define the second cradle therebetween.

10. The channel mount fixing of claim 9,
wherein the body section has a top end and a bottom end, the top end and bottom end defining a longitudinal axis therebetween, and
wherein the object support and the second object support are spaced apart along the longitudinal axis in a stacked configuration.

11. The channel mount fixing of claim 9 or 10, further comprising:
a third object support, the third object support configured to support a third elongated article, the third object support extending from the body section, the third object support and the body section defining a third cradle therebetween, the third cradle configured to receive the third elongated article, the third object support further comprising:
a third block, the third block configured to attach to the third elongated article via a third cable tie, the third block defining a third cable tie pass-thru therethrough that is configured to receive the third cable tie therein;
a third stand-off member, the third stand-off member configured to space the third block apart from the body section, the third block extending from the third stand-off member; and
a third retainer arm, the third retainer arm configured to retain the third elongated article in the third cradle, the third retainer arm extending from the third block.

12. The channel mount fixing of claim 11,
wherein the body section has a top end and a bottom end, the top end and bottom end defining a longitudinal axis therebetween, and
wherein the object support, the second object support, and the third object support are spaced apart along the longitudinal axis.

13. The channel mount fixing of any one of the preceding claims, wherein at least one of the retainer arm, second retainer arm, or third retainer arm further comprises:
cradle identification indicia, the cradle identification indicia configured to indicate to a user an identity of a cradle.

14. The channel mount fixing of claims 9 t0 13, wherein the second object support further comprises:
a fourth retainer arm, the fourth retainer arm configured to retain the third elongated article in the third cradle, the fourth retainer arm extending from the second block, the fourth retainer arm extending in a direction towards the third block, the fourth retainer arm spaced apart from the third retainer arm to define the third cradle therebetween.

15. The channel mount fixing of any one of the preceding claims, wherein the block further comprises:
a cut director configured to protect the respective elongated article from damage when the respective cable tie is cut off the channel mount fixing, the cut director further comprising:
a first ridge extending from a block surface of the block; and
a second ridge extending from the block surface, the first ridge and the second ridge defining the cradle therebetween, the cradle configured for spanning support of the respective cable tie, the cradle configured to receive a cutting tool for cutting the respective cable tie.
